# FASCICULE DE BREVET EUROPEEN

(11) **EP 3 098 831 B1**
(45) Date de publication et mention de la délivrance du brevet: **25.10.2017**
(21) Numéro de dépôt: 16171328.4
(22) Date de dépôt: 25.05.2016
(51) Int. Cl.: H01H 73/04, H01H 1/22

(54) **PÔLE MOBILE ET APPAREIL DE COUPURE**
MOBILER POL UND SCHNEIDEGERÄT
MOBILE POLE AND BREAKER APPARATUS

(30) Priorité: 28.05.2015 FR 1554812
(43) Date de publication de la demande: 30.11.2016
(73) Titulaire: Schneider Electric Industries SAS, 92500 Rueil-Malmaison (FR)
(72) Inventeur: HERREROS, Javier, 38050 GRENOBLE cedex 09 (FR); ROELANDT, Hubert, 38050 Grenoble Cedex 09 (FR)
(74) Mandataire: Lavoix

(56) Documents cités:
- EP-A1- 1 914 767
- EP-A1- 2 187 421
- FR-A1- 2 589 625
- US-B1- 6 977 568

## Description

La présente invention concerne un pôle mobile d'un appareil de coupure. L'invention se rapporte également à un appareil de coupure comportant au moins un tel pôle mobile.

Il est connu du document EP 0 222 645 A1 ou EP 1 914 767 A1 un appareil de coupure à forte tenue électrodynamique comportant une entrée, une sortie, des pôles mobiles et des pôles fixes.

Chaque pôle mobile comporte un ensemble de contacts mobiles.

Chaque pôle fixe comporte au moins un contact fixe.

Lorsque les contacts mobiles sont en contact avec les contacts fixes, l'appareil de coupure laisse passer le courant entre son entrée et sa sortie. L'appareil de coupure est en position de fermeture.

Lorsque les contacts mobiles sont éloignés avec les contacts fixes, l'appareil de coupure ne laisse pas passer le courant entre son entrée et sa sortie. L'appareil de coupure est en position d'ouverture.

Les structures d'appareil de coupure existantes sont adaptées à un faible niveau d'endurance mécanique, c'est-à-dire à un nombre limité de cycles d'ouverture et de fermeture de l'appareil de coupure.

En revanche, à partir d'un niveau d'endurance mécanique plus élevé, l'effet dynamique d'aller-retour provoque une casse de l'appareil de coupure.

Or, certaines industries souhaitent disposer d'une structure d'appareil de coupure pouvant résister à un nombre de cycles croissant. C'est le cas, par exemple, du secteur éolien.

Il existe donc un besoin pour une structure d'appareil de coupure adaptée à un niveau d'endurance mécanique plus élevé.

A cet effet, il est proposé un pôle mobile d'un appareil de coupure comportant une cage de pôles, la cage de pôles comportant deux parois latérales parallèles entre elles, au moins une des deux parois latérales délimitant au moins un trou de centrage définissant un axe de centrage et un volume intérieur. Le pôle mobile comprend également un pied de support et deux flasques. La cage de pôles est fixée de manière rotative par rapport au pied de support. Chaque flasque est propre à être relié à une paroi latérale respective de la cage de pôles, chaque flasque comportant des organes de fixation, chaque organe de fixation étant destiné à coopérer respectivement avec un des trous de centrages, au moins un des organes de fixation étant un organe de reprise d'efforts comportant une partie de fixation définissant un axe d'insertion et une partie de centrage propre à coopérer avec la partie de fixation, la partie de centrage étant propre à s'insérer au moins en partie dans le volume intérieur du trou de centrage avec lequel ledit au moins un des organes de fixation est propre à coopérer de sorte que l'axe d'insertion de la partie de centrage soit aligné avec l'axe de centrage du trou de centrage avec lequel ledit au moins un des organes de fixation est propre à coopérer.

Suivant des modes de réalisation particuliers, le pôle mobile comprend une ou plusieurs des caractéristiques suivantes, prise(s) isolément ou suivant toutes les combinaisons techniquement possibles :
- au moins une des parois latérales délimite deux trous de centrage définissant chacun un axe de centrage et un volume intérieur, le flasque propre à être relié à la paroi latérale considérée comportant deux organes de reprise d'efforts.
- la paroi latérale présente une forme allongée selon une première direction, les deux organes de reprise d'efforts étant agencés le long d'une ligne parallèle à la première direction.
- la paroi latérale comporte une extrémité supérieure, une extrémité inférieure et une partie médiane reliant les deux extrémités, le pied de support étant relié à l'extrémité inférieure de la paroi latérale de la cage de pôles, le premier trou de centrage étant délimité par l'extrémité supérieure de la paroi latérale, le deuxième trou de centrage étant délimité par la partie médiane de la paroi latérale.
- la paroi latérale est dépourvue de plot de centrage.
- la partie de fixation et la partie de centrage de chaque organe de reprise d'efforts sont venues de matière.
- au moins un des organes de reprise d'efforts est une vis épaulée.
- la partie de fixation et la partie de centrage de chaque organe de reprise d'efforts sont deux pièces distinctes.
- la partie de centrage de chaque organe de reprise d'efforts fait partie de la flasque.

Il est aussi proposé un appareil de coupure comportant au moins un pôle mobile tel que défini plus haut et un pôle fixe pour chaque pôle mobile. Chaque pôle mobile est propre à coopérer avec un pôle fixe respectif. L'appareil de coupure comporte également un mécanisme propre à manoeuvrer la position de chaque pôle mobile par rapport au pôle fixe avec lequel le pôle mobile est propre à coopérer.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une vue en coupe d'un exemple de l'appareil de coupure ;
- figure 2, une vue en perspective du mécanisme d'entraînement de l'appareil de coupure de la figure 1 ;
- figures 3 et 4, des vues en perspective d'un exemple de pôle mobile ;
- figure 5, une vue de côté du pôle mobile de la figure 3, et
- figure 6, une vue en coupe du pôle mobile de la figure 3 selon un premier plan de coupe.

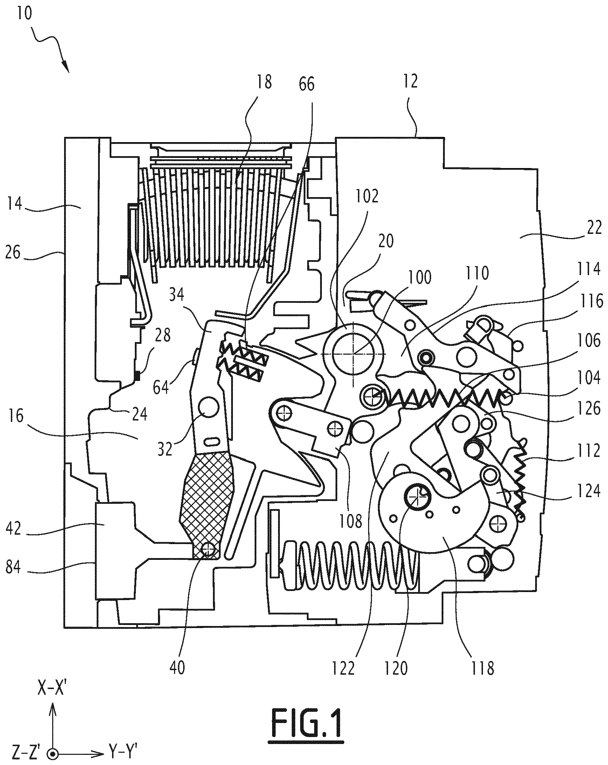

Un appareil de coupure 10 est représenté à la figure 1.

L'appareil de coupure 10 est propre à interrompre le passage du courant électrique ou à permettre le passage du courant électrique entre une entrée de l'appareil de coupure 10 et une sortie de l'appareil de coupure 10.

L'appareil de coupure 10 est en position d'ouverture lorsque le passage du courant entre l'entrée et la sortie est interrompu. L'appareil de coupure 10 est en position de fermeture lorsque le passage du courant entre l'entrée et la sortie n'est pas interrompu.

L'appareil de coupure 10 est, par exemple, un disjoncteur.

En particulier, le disjoncteur est, par exemple, un disjoncteur à forte tenue électrodynamique, c'est-à-dire un disjoncteur adapté pour une grandeur électrique supérieure ou égale à 800A. De préférence, le disjoncteur est adapté pour une grandeur électrique supérieure ou égale à 3200A.

Selon un autre exemple, l'appareil de coupure 10 est un interrupteur.

L'appareil de coupure 10 comporte un boîtier 12, également appelé couvercle ou plastron, une paroi 14, un ensemble de pôles mobiles 16, des chambres d'extinction d'arc 18, un arbre de pôles 20 et un mécanisme d'entraînement 22.

Le boîtier 12 définit un premier espace intérieur de l'appareil de coupure 10 et un deuxième espace extérieur de l'appareil de coupure 10.

La paroi 14 s'étend principalement dans un plan.

Le plan est défini par une première direction axiale notée X-X' et par une deuxième direction axiale notée Z-Z' sur la figure 1.

La première direction axiale X-X' appartient au plan de la feuille.

La deuxième direction axiale Z-Z' est perpendiculaire au plan de la feuille.

La paroi 14 comporte une première face 24, une deuxième face 26 et un ensemble de contacts électriques fixes 28.

La première face 24 est située dans le premier espace intérieur de l'appareil de coupure 10.

La deuxième face 26 est située dans le deuxième espace extérieur de l'appareil de coupure 10.

Les contacts électriques fixes 28 sont agencés le long de la deuxième direction axiale Z-Z'.

Sur la figure 1, un seul contact électrique fixe 28 est représenté.

D'une façon générale, lorsque des éléments sont agencés le long de la deuxième direction axiale Z-Z', un seul des éléments est représenté sur la figure 1.

Les contacts électriques fixes 28 sont fixés sur la première face 24.

Chaque contact électrique fixe 28 présente la forme d'une pastille.

Chaque pastille est réalisée en un matériau conducteur.

Le matériau conducteur est, par exemple, un alliage argenté.

Les pôles mobiles 16 sont agencés le long de la deuxième direction axiale Z-Z'.

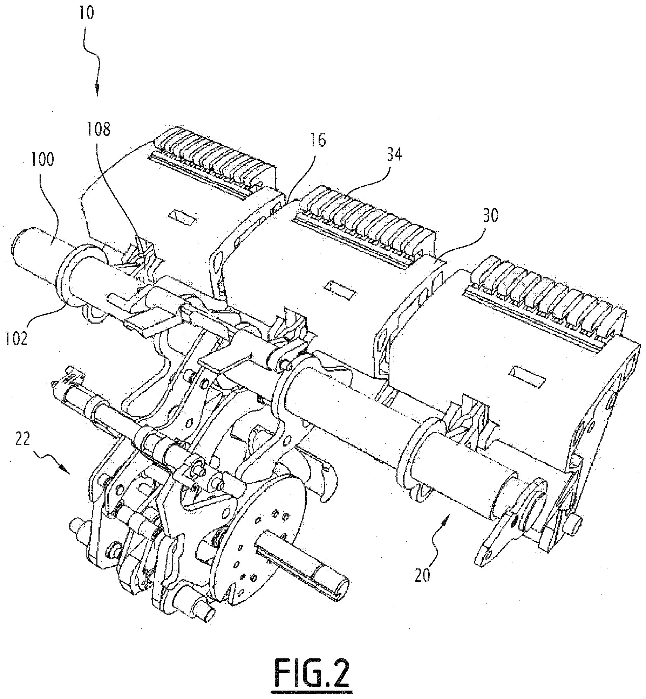

Comme visible sur la figure 2, l'appareil de coupure 10 comporte trois pôles mobiles 16 : un pôle mobile central et deux pôles mobiles latéraux.

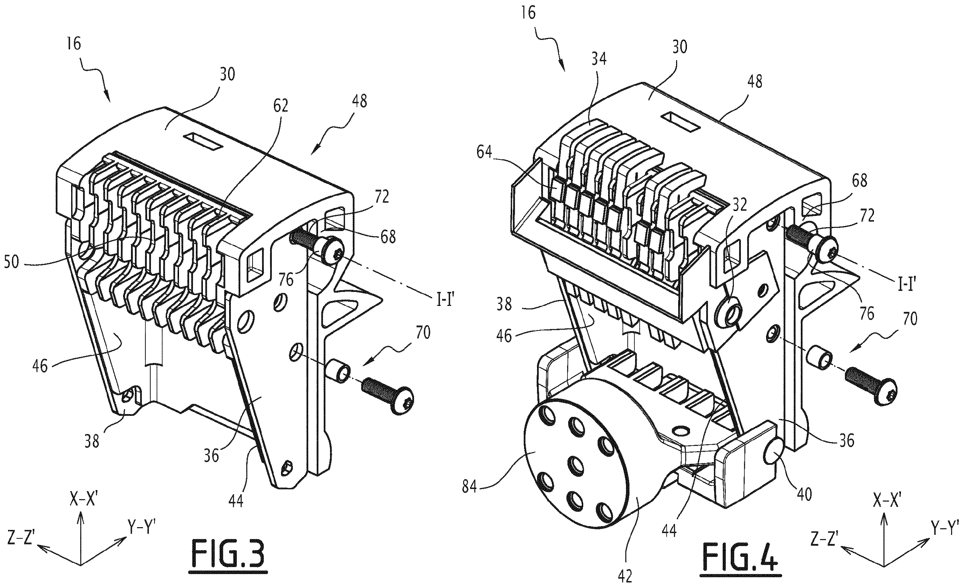

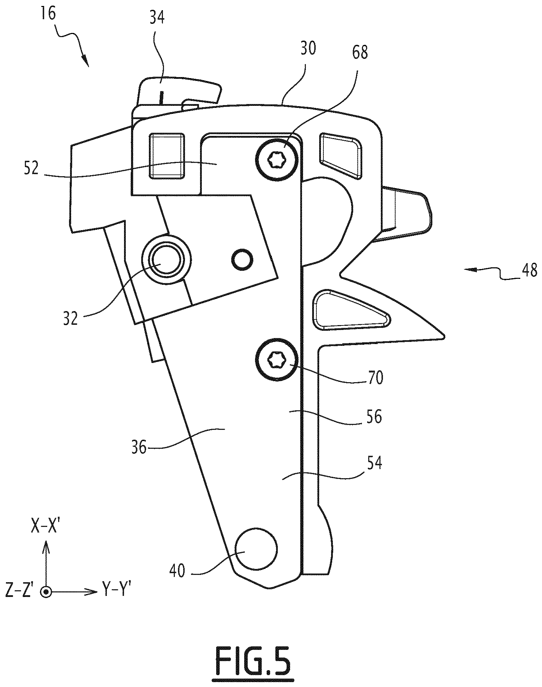

Un exemple de pôle mobile 16 est représenté aux figures 3 à 6.

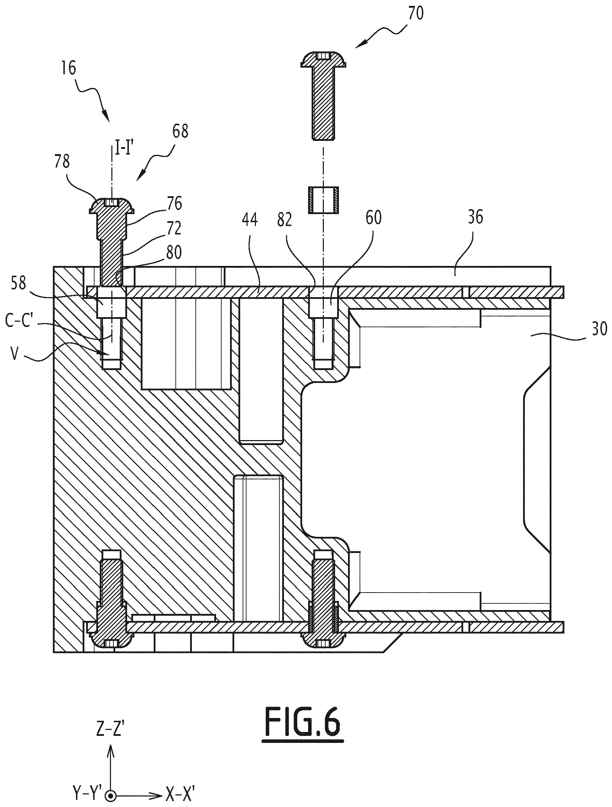

Comme visible aux figures 3 à 6, le pôle mobile 16 comporte une cage de pôles 30, un axe 32, un ensemble de supports 34 (non représentés sur les figures 3 et 6), un premier flasque 36, un deuxième flasque 38, un pivot 40 et un pied de support 42.

La cage de pôles 30 est sensiblement allongée selon une première direction axiale X-X'.

La cage de pôles 30 est réalisée en thermodur.

La cage de pôles 30 comporte une première paroi latérale 44, une deuxième paroi latérale 46, une face arrière 48 et une structure de réception des supports 50.

La première paroi latérale 44 s'étend sensiblement selon un plan.

Ce plan est défini par la première direction axiale X-X' et une troisième direction axiale Y-Y'.

La troisième direction axiale Y-Y' est perpendiculaire à la première direction axiale X-X' et à la deuxième direction axiale Z-Z'.

La première paroi latérale 44 présente une première extrémité, dite extrémité supérieure 52, une deuxième extrémité, dite extrémité inférieure 54, et une partie médiane 56.

Selon l'exemple des figures 3 à 6, l'extrémité inférieure 54 présente une forme évasée.

La partie médiane 56 relie les extrémités 52 et 54 de la première paroi latérale 44.

La première paroi latérale 44 délimite, en outre, un premier trou de centrage 58 et un deuxième trou de centrage 60.

Le premier trou de centrage est situé dans l'extrémité supérieure 52 de la cage de pôles 30.

Le premier trou de centrage 58 définit un premier axe de centrage C-C' et un premier volume intérieur V.

Le premier axe de centrage C-C' est parallèle à la deuxième direction axiale Z-Z'.

Le deuxième trou de centrage 60 est situé dans la partie médiane 56.

Le deuxième trou de centrage présente les mêmes caractéristiques que le premier trou de centrage 58.

Selon l'exemple particulier des figures 3 à 6, le deuxième trou de centrage 60 est situé sensiblement à équidistance de l'extrémité supérieure 52 et de l'extrémité inférieure 54. Par sensiblement, il est entendu que la distance entre le deuxième trou de centrage 60 et l'extrémité supérieure 52 est égale à plus ou moins 5% près à la distance entre le deuxième trou de centrage 60 et l'extrémité inférieure 54.

Comme cela est le cas pour les figure 3 à 6, de préférence, la première paroi latérale 44 est, en outre, dépourvue de plot propre à faire saillie de la cage de pôles 30.

La première paroi latérale 44 et la deuxième paroi latérale 46 sont symétriques par rapport à un plan de symétrie.

Le plan de symétrie est défini par la première direction axiale X-X' et par la troisième direction axiale Y-Y'.

Les mêmes remarques relatives à la première paroi latérale 44 s'appliquent donc également à la deuxième paroi latérale 46. Ces remarques ne sont pas répétées.

La face arrière 48 s'étend sensiblement dans un plan.

Le plan est défini par la première direction axiale X-X' et par la deuxième direction axiale Z-Z'.

La première paroi latérale 44, la deuxième paroi latérale 46 et la face arrière 48 définissent l'espace intérieur de la cage de pôles 30.

Pour la suite, il est désigné par le terme « avant de la cage de pôles 30 », la zone située à l'opposé de la face arrière 48.

La droite définie par le premier trou de centrage 58 et par le deuxième trou de centrage 60 est sensiblement parallèle à la première direction axiale X-X' et située à proximité de la face arrière 48 de la cage de pôles 30.

La structure de réception des supports 50 est propre à loger les supports 34.

La structure de réception des supports 50 comporte un ensemble de plaques 62.

Les plaques 62 sont régulièrement agencées le long de la deuxième direction axiale Z-Z'.

Les plaques 62 s'étendent chacune selon des plans parallèles et régulièrement espacés.

Les plans dans lesquels s'étendent les plaques 62 sont définis par la première direction axiale X-X' et la troisième direction axiale Y-Y'.

L'axe 32 s'étend selon la deuxième direction axiale Z-Z'.

L'axe 32 traverse la première paroi latérale 44 et la deuxième paroi latérale 46.

L'axe 32 est relié au pôle mobile 16.

Les supports 34 sont agencés le long de la deuxième direction axiale Z-Z'.

Les supports 34 sont articulés à l'intérieur de la cage de pôles 30 en rotation autour de l'axe 32.

Chaque support 34 présente une forme allongée sensiblement orientée selon la première direction axiale X-X'.

Chaque support 34 comporte un contact électrique mobile 64 et des organes formant ressort 66.

Le contact électrique mobile 64 d'un support 34 est situé vers l'avant de la cage de pôles 30.

A chaque contact électrique fixe 28 correspond un contact électrique mobile 64.

Le contact électrique fixe 28 et le contact électrique mobile 64 correspondant sont agencés pour être en contact lors de la fermeture de l'appareil de coupure 10.

Chaque contact électrique mobile 64 présente la forme d'une pastille.

Chaque pastille est réalisée en un matériau conducteur. Le matériau conducteur est, par exemple, un alliage argenté.

Les organes formant ressort 66 sont agencés le long de la deuxième direction axiale Z-Z'.

Les organes formant ressort 66 sont propres à solliciter les contacts électriques mobiles 64 de manière à ce que les contacts électriques mobiles 64 fassent saillie de la cage de pôles 30.

Les organes formant ressort 66 sont, par exemple, un ou plusieurs ressorts de pression de contact.

Les organes formant ressort 66 comportent chacun une première extrémité et une deuxième extrémité.

La première extrémité est fixée à un support 34.

La deuxième extrémité est fixée à la cage de pôles 30.

Le premier flasque 36 est propre à être relié à la première paroi latérale 44.

Le premier flasque 36 présente une structure sensiblement plane et de forme similaire à la forme de la première paroi latérale 44.

Le terme d'extrémité inférieure 54 du premier flasque 36 est donc utilisé dans la suite de la description.

Le premier flasque 36 comporte un premier organe de fixation 68 et un deuxième organe de fixation 70.

Chaque organe de fixation 68, 70 est destiné à coopérer respectivement avec un des trous de centrage 58, 60.

Selon l'exemple particulier des figures 3 à 6, le premier organe de fixation 68 et le deuxième organe de fixation 70 sont identiques.

Les mêmes remarques relatives au premier organe de fixation 68 s'appliquent donc également au deuxième organe de fixation 70. Seul le premier organe de fixation 68 sera décrit par la suite.

Le premier organe de fixation 68 est un organe de reprise d'efforts.

Le premier organe de fixation 68 comporte une partie de fixation 72 définissant un premier axe d'insertion I-I' et une partie de centrage 76 propre à coopérer avec la partie de fixation 72.

Il est défini le centrage du premier flasque 36 sur la première paroi latérale 44 comme le maintien de l'alignement du premier axe d'insertion I-I' et du premier axe de centrage C-C'. De façon analogue, le centrage du deuxième flasque 38 sur la deuxième paroi latérale 46 est défini.

D'une manière générale, il est utilisé dans la suite le terme de centrage des flasques 36, 38 sur la cage de pôles 30.

La partie de centrage 76 est propre à s'insérer au moins en partie dans le premier volume intérieur V de sorte que le premier axe d'insertion I-I' de la partie de centrage soit aligné avec le premier axe de centrage C-C'.

Selon l'exemple particulier des figures 3 à 6, la partie de fixation 72 du premier organe de fixation 68 est une vis et la partie de centrage 76 du premier organe de fixation 68 est une bague centreuse.

La vis est en métal et comporte un corps de vis.

Le corps de vis est une tige filetée.

Le corps de vis présente une longueur comprise entre 19 millimètres et 21 millimètres et un diamètre compris entre 5,5 millimètres et 6,5 millimètres.

La vis comporte une tête de vis 78.

La tête de vis 78 présente un diamètre supérieur au diamètre du corps de vis.

La bague centreuse présente une forme cylindrique à base circulaire, la vis s'insérant dans la bague centreuse.

La bague centreuse présente un diamètre intérieur supérieur au diamètre du corps de vis et inférieur au diamètre de la tête de vis 78.

La bague centreuse présente une longueur comprise entre 7,5 millimètres et 8,5 millimètres.

Le premier flasque 36 délimite, en outre, un premier trou d'insertion 80 et un deuxième trou d'insertion 82.

Le premier trou d'insertion 80 est propre à recevoir le premier organe de fixation 68.

Le premier trou d'insertion 80 coïncide avec le premier trou de centrage 58.

Le deuxième trou d'insertion 82 est propre à recevoir le deuxième organe de fixation 70.

Le deuxième trou d'insertion 82 coïncide avec le deuxième trou de centrage 60.

Le premier flasque 36 et le deuxième flasque 38 sont symétriques par rapport à un plan de symétrie.

Le plan de symétrie est défini par la première direction axiale X-X' et par la troisième direction axiale Y-Y'.

Les mêmes remarques relatives au premier flasque 36 s'appliquent donc également pour le deuxième flasque 38. Ces remarques ne sont pas répétées.

Le pivot 40 s'étend selon la deuxième direction axiale Z-Z'.

Le pivot 40 est propre à relier le pied de support 42 à l'extrémité inférieure 54 du premier flasque 36 et à l'extrémité inférieure 54 du deuxième flasque 38.

Le pied de support 42 est monté pivotant autour du pivot 40.

Le pied de support 42 comporte une surface d'appui 84.

La surface d'appui 84 est fixée sur la première face 24 de la paroi 14.

Les chambres d'extinction d'arc 18 sont propres à éteindre l'arc électrique qui se forme durant la phase d'ouverture du dispositif de coupure 10, lorsque les contacts électriques mobiles 64 s'éloignent des contacts électriques fixes 28.

Il existe autant de chambres d'extinction d'arc 18 que de pôles mobiles 16.

Les chambres d'extinction d'arc 18 sont disposées selon la deuxième direction axiale Z-Z'.

Les chambres d'extinction d'arc sont fixées à l'intérieur de l'appareil de coupure 10 et placées au-dessus des contacts électriques fixes 28 et des contacts électriques mobiles 64.

L'arbre des pôles 20 est propre à transmettre aux pôles mobiles 16 l'ordre d'ouverture ou de fermeture de l'appareil de coupure 10.

L'arbre des pôles 20 comporte un conduit 100, des manivelles 102, un taquet de retenue 104, un ressort d'ouverture 106 et des tringles de liaison 108.

Le conduit 100 s'étend de façon transversale selon la deuxième direction axiale Z-Z' et est propre à pivoter autour de la deuxième direction axiale Z-Z'.

Le conduit 100 est commun à l'ensemble des pôles mobiles 16.

Il existe autant de manivelles 102 que de pôles mobiles 16.

Chaque manivelle 102 est propre à coopérer avec un pôle mobile 16.

Une unique manivelle 102 est propre à coopérer avec le mécanisme d'entraînement 22.

Comme illustré par la figure 2, dans le cas d'un appareil de coupure comportant un pôle mobile central et deux pôles mobiles latéraux, la manivelle 102 propre à coopérer avec le mécanisme d'entraînement 22 est la manivelle 102 qui est propre à coopérer avec le pôle mobile central.

Les manivelles 102 sont reliées au conduit 100.

Les manivelles sont propres à se déplacer entre une position de fermeture et une position d'ouverture.

La position de fermeture correspond à la position de fermeture de l'appareil de coupure 10.

La position d'ouverture correspond à la position d'ouverture de l'appareil de coupure 10.

Le taquet de retenue 104 est fixe et est propre à retenir le ressort d'ouverture 106.

Le ressort d'ouverture 106 est propre à rappeler la manivelle 102 vers sa position d'ouverture.

Le ressort d'ouverture 106 comporte deux extrémités.

La première extrémité du ressort d'ouverture 106 est reliée à une extrémité à la manivelle 102.

La deuxième extrémité du ressort d'ouverture 106 est reliée au taquet de retenue 104.

Les tringles de liaison 108 sont disposées selon la deuxième direction axiale Z-Z'.

Il y a autant de tringles de liaison 108 que de manivelles 102. Chaque tringle de liaison 108 est propre à coopérer avec une manivelle 102.

Chaque tringle de liaison 108 comporte deux extrémités.

Chaque tringle de liaison 108 est montée pivotante à sa première extrémité avec la face arrière 48 de la cage de pôles 30 d'un pôle mobile 16.

Chaque tringle de liaison 108 est montée pivotante à sa deuxième extrémité avec la manivelle 102 d'un pôle mobile 16.

Le mécanisme d'entraînement 22 est propre à transmettre à l'arbre des pôles 20 l'ordre d'ouverture ou de fermeture de l'appareil de coupure 10.

Le mécanisme d'entraînement 22 comporte un organe de déclenchement 110, un organe entraîneur 112, un cliquet d'ouverture 114, un organe de fermeture 116 et un organe d'armement 118.

L'organe de déclenchement 110 est propre à déclencher l'ouverture ou la fermeture de l'appareil de coupure 10 par l'intermédiaire de l'arbre des pôles 20.

L'organe de déclenchement 110 comporte un axe fixe 120, un crochet de déclenchement 122, une première biellette 124 et une deuxième biellette 126.

L'axe fixe 120 de l'organe de déclenchement 110 s'étend selon la deuxième direction axiale Z-Z'.

Le crochet de déclenchement 122 est articulé en rotation autour de l'axe fixe 120 de l'organe de déclenchement 110.

La première biellette 124 est articulée en rotation autour du crochet de déclenchement 122.

La deuxième biellette 126 est montée pivotante autour de la première biellette 124.

La deuxième biellette 126 est propre à s'accoupler mécaniquement à une manivelle 102 de l'arbre des pôles 20.

L'organe entraîneur 112 est propre à entraîner l'organe de déclenchement 110 par l'intermédiaire de la première biellette 124.

Le cliquet d'ouverture 114 est propre à maintenir l'appareil de coupure 10 en position d'ouverture.

L'organe de fermeture 116 est propre à maintenir l'appareil de coupure 10 en position de fermeture.

L'organe d'armement 118 est propre à déplacer l'organe entraîneur 112. Le déplacement de l'organe entraîneur 112 est propre à mettre l'appareil de coupure 10 en position de fermeture.

Le fonctionnement de l'appareil de coupure 10 est maintenant décrit.

Le fonctionnement général d'un appareil de coupure et en particulier le fonctionnement du mécanisme d'entraînement 22 sont supposés connus. Ils ne sont donc pas décrits dans la suite.

Les phases d'ouverture et de fermeture d'un pôle mobile 16 induisent des efforts au niveau de la cage de pôles 30.

Les efforts sont orientés dans le plan défini par la première direction axiale X-X' et par la troisième direction axiale Y-Y'.

Les parties de centrage des organes de fixation de chaque flasque permettent une reprise de ces efforts.

De nombreux autres modes de réalisation sont possibles.

Dans un autre mode de réalisation, la partie de fixation 72 et la partie de centrage 76 sont venues de matière.

Le premier organe de fixation 68 est, par exemple, une vis épaulée.

La partie de fixation 72 de la vis épaulée présente une forme filetée.

La partie de centrage 76 présente une forme cylindrique à base circulaire extérieurement lisse.

Selon un autre mode de réalisation, la partie de centrage 76 fait partie du premier flasque 36.

Le premier trou d'insertion 80 du premier flasque délimite alors une bague centreuse présentant une forme cylindrique à base circulaire semblable à la bague centreuse du premier mode de réalisation.

Dans d'autres variantes, chacune des parois latérales est munie, outre les organes de fixation des flasques décrits précédemment, d'un plot. Les flasques sont alors propres à venir s'emboîter dans de tels plots.

Dans d'autres variantes, un ou plusieurs des organes de fixation des flasques sont des vis usuelles, les autres organes de fixation étant tels que décrits précédemment.

Les appareils de coupure connus dans les documents de l'état de la technique ne fonctionnent plus à partir d'un certain niveau d'endurance mécanique.

La demanderesse a constaté que la cause d'un tel dysfonctionnement résulte de la casse d'un ou de plusieurs pôle(s) mobile(s).

Plus précisément, après des endurances mécaniques très élevées, la cage de pôles se casse et ne permet plus d'assurer une bonne pression de contact des contacts électriques mobiles sur les contacts électriques fixes.

La recherche des causes de casse du pôle mobile a permis d'identifier les moyens propres à relier les flasques sur la cage de pôles.

Dans l'état de la technique, le centrage des flasques sur la cage de pôles était assuré par un plot situé sur l'extrémité inférieure de la cage de pôles.

Selon la structure de pôles mobiles 16 selon l'invention, la reprise des efforts est assurée par les organes de fixation 68, 70 des flasques 36, 38 sur la cage de pôles 30.

Les tests effectués sur la structure de pôles mobiles 16 selon l'invention montrent un niveau d'endurance mécanique plus élevé par rapport à l'état de la technique. Le nombre de cycles pouvant être réalisés sans casse du pôle mobile 16 est bien supérieur au nombre de cycles que peuvent réaliser sans casse les pôles mobiles de l'état de la technique.

De plus, le pôle mobile 16 proposé présente l'avantage de ne pas impliquer de modifications substantielles de la structure de la cage de pôles 30 et des flasques 36, 38. Il n'y a pas, par exemple, de rajout de matière au niveau de la cage de pôles 30 pour garantir une reprise d'efforts plus adaptée aux effets dynamiques d'aller-retour.

Tous les modes de réalisation et toutes les variantes décrites précédemment sont combinables, lorsque cela est techniquement possible, pour obtenir de nouveaux modes de réalisation de l'invention.

## Revendications

1. Pôle mobile (16) d'un appareil de coupure (10) comportant :
- une cage de pôles (30), la cage de pôles (30) comportant deux parois latérales (44, 46) parallèles entre elles, au moins une des deux parois latérales (44) délimitant au moins un trou de centrage (58) définissant un axe de centrage (C-C') et un volume intérieur (V),
- un pied de support (42), la cage de pôles (30) étant fixée de manière rotative par rapport au pied de support (42),
- deux flasques (36, 38), chaque flasque (36, 38) étant propre à être relié à une paroi latérale (44, 46) respective de la cage de pôles (30), chaque flasque (36, 38) comportant des organes de fixation (68), chaque organe de fixation (68) étant destiné à coopérer respectivement avec un des trous de centrages (58), au moins un des organes de fixation (68) étant un organe de reprise d'efforts
**caractérisé en ce que** ledit au moins un organe de fixation comporte une partie de fixation (72) définissant un axe d'insertion (I-I') et une partie de centrage (76) propre à coopérer avec la partie de fixation (72), la partie de centrage (76) étant propre à s'insérer au moins en partie dans le volume intérieur (V) du trou de centrage (58) avec lequel ledit au moins un des organes de fixation (68) est propre à coopérer de sorte que l'axe d'insertion (I-I') de la partie de centrage (76) soit aligné avec l'axe de centrage (C-C') du trou de centrage (58) avec lequel ledit au moins un des organes de fixation (68) est propre à coopérer.

2. Pôle mobile selon la revendication 1, dans lequel au moins une des parois latérales (44, 46) délimite deux trous de centrage (58, 60) définissant chacun un axe de centrage (C-C') et un volume intérieur (V), le flasque (36, 38) propre à être relié à la paroi latérale (44, 46) considérée comportant deux organes de reprise d'efforts (68, 70).

3. Pôle mobile selon la revendication 2, dans lequel la paroi latérale (44) présente une forme allongée selon une première direction (X-X'), les deux organes de reprise d'efforts (68, 70) étant agencés le long d'une ligne parallèle à la première direction (X-X').

4. Pôle mobile selon la revendication 2 ou 3, dans lequel la paroi latérale (44) comporte une extrémité supérieure (52), une extrémité inférieure (54) et une partie médiane (56) reliant les deux extrémités (52, 54), le pied de support (42) étant relié à l'extrémité inférieure (54) de la paroi latérale (44) de la cage de pôles (30), le premier trou de centrage (58) étant délimité par l'extrémité supérieure (52) de la paroi latérale (44), le deuxième trou de centrage (60) étant délimité par la partie médiane (56) de la paroi latérale (44).

5. Pôle mobile selon l'une quelconque des revendications 1 à 4, dans lequel au moins une des parois latérales (44, 46) est dépourvue de plot de centrage.

6. Pôle mobile selon l'une quelconque des revendications 1 à 5, dans lequel la partie de fixation (72) et la partie de centrage (76) de chaque organe de reprise d'efforts (68, 70) sont venues de matière.

7. Pôle mobile selon la revendication 6, dans lequel au moins un des organes de reprise d'efforts (68, 70) est une vis épaulée.

8. Pôle mobile selon l'une quelconque des revendications 1 à 5, dans lequel la partie de fixation (72) et la partie de centrage (76) de chaque organe de reprise d'efforts (68, 70) sont deux pièces distinctes.

9. Pôle mobile selon la revendication 8, dans lequel la partie de centrage (76) de chaque organe de reprise d'efforts (68, 70) fait partie de la flasque (36, 38).

10. Appareil de coupure (10) comportant :
- au moins un pôle mobile (16) selon l'une quelconque des revendications 1 à 9,
- un pôle fixe pour chaque pôle mobile (16), chaque pôle mobile (16) étant propre à coopérer avec un pôle fixe respectif, et
- un mécanisme (22) propre à manoeuvrer la position de chaque pôle mobile (16) par rapport au pôle fixe avec lequel le pôle mobile (16) est propre à coopérer.

## Patentansprüche

1. Bewegbarer Pol (16) für eine Unterbrechervorrichtung (10), aufweisend:
- ein Pole-Gehäuse (30), wobei das Pole-Gehäuse (30) zwei Seitenwände (44, 46) aufweist, die zueinander parallel sind, wobei wenigstens eine der beiden Seitenwände (44) wenigstens ein Zentrierloch (58) begrenzt, das eine Zentrierachse (C-C') und ein Innenvolumen (V) definiert,
- einen Stützfuß (42), wobei das Pole-Gehäuse (30) bezüglich des Stützfußes (42) drehbar angebracht ist,
- zwei Flansche (36, 38), wobei jeder Flansch (36, 38) imstande ist, um mit einer jeweiligen Seitenwand (44, 46) des Pole-Gehäuses (30) verbunden zu sein, wobei jeder Flansch (36, 38) Anbringungsorgane (68) aufweist, wobei jedes Anbringungsorgan (68) dazu bestimmt ist, um jeweilig mit einem der Zentrierlöcher (58) zusammenzuwirken, wobei wenigstens eines der Anbringungsorgane (68) ein Organ zur Scherkraftaufnahme ist,
**dadurch gekennzeichnet, dass** das besagte wenigstens eine Anbringungsorgan aufweist
einen Befestigungsabschnitt (72), der eine Einsetzachse (I-I`) definiert, und einen Zentrierabschnitt (76), der imstande ist, mit dem Befestigungsabschnitt (72) zusammenzuwirken, wobei der Zentrierabschnitt (76) imstande ist, zumindest teilweise in das Innenvolumen (V) des Zentrierlochs (58) eingesetzt zu werden, mit welchem das besagte wenigstens eine der Anbringungsorgane (68) derart zusammenwirken kann, dass die Einsetzachse (I-I`) des Zentrierabschnitts (76) zu der Zentrierachse (C-C') des Zentrierlochs (58) ausgerichtet ist, mit welchem das besagte mindestens eine der Anbringungsorgane (68) zusammenwirken kann.

2. Bewegbarer Pol gemäß Anspruch 1, wobei wenigstens eine der Seitenwände (44, 46) zwei Zentrierlöcher (58, 60) begrenzt, die jeweils eine Zentrierachse (C-C') und ein Innenvolumen (V) definieren, wobei der Flansch (36, 38), der imstande ist, mit der betreffenden Seitenwand (44, 46) verbunden zu sein, zwei Organe zur Scherkraftaufnahme (68, 70) aufweist.

3. Bewegbarer Pol gemäß Anspruch 2, wobei die Seitenwand (44) eine entlang einer ersten Richtung (X-X') längliche Form hat, wobei die beiden Organe zur Scherkraftaufnahme (68, 70) entlang einer Linie parallel zu der ersten Richtung (X-X') angeordnet sind.

4. Bewegbarer Pol gemäß Anspruch 2 oder 3, wobei die Seitenwand (44) ein oberes Ende (52), ein unteres Ende (54) und einen mittleren Abschnitt (56) hat, der die beiden Enden (52, 54) verbindet, wobei der Stützfuß (42) mit dem unteren Ende (54) der Seitenwand (44) des Pole-Gehäuses (30) verbunden ist, wobei das erste Zentrierloch (58) von dem oberen Ende (52) der Seitenwand (44) begrenzt ist, wobei das zweite Zentrierloch (60) von dem mittleren Abschnitt (56) der Seitenwand (44) begrenzt ist.

5. Bewegbarer Pol gemäß irgendeinem der Ansprüche 1 bis 4, wobei wenigstens eine der Seitenwände (44, 46) Zentrierstiftfrei ist.

6. Bewegbarer Pol gemäß irgendeinem der Ansprüche 1 bis 5, wobei der Befestigungsabschnitt (72) und der Zentrierabschnitt (76) jedes Organs zur Scherkraftaufnahme (68, 70) aus einem Stück sind.

7. Bewegbarer Pol gemäß Anspruch 6, wobei wenigstens eines der Organe zur Scherkraftaufnahme (68, 70) eine mit einer Schulter versehene Schraube ist.

8. Bewegbarer Pol gemäß irgendeinem der Ansprüche 1 bis 5, wobei der Befestigungsabschnitt (72) und der Zentrierabschnitt (76) jedes Organs zur Scherkraftaufnahme (68, 70) zwei verschiedene Stücke sind.

9. Bewegbarer Pol gemäß Anspruch 8, wobei der Zentrierabschnitt (76) jedes Organs zur Scherkraftaufnahme (68, 70) Bestandteil des Flansches (36, 38) ist.

10. Unterbrechervorrichtung (10), aufweisend:
- wenigstens einen bewegbaren Pol (16) gemäß irgendeinem der Ansprüche 1 bis 9,
- einen feststehenden Pol für jeden bewegbaren Pol (16), wobei jeder bewegbare Pol (16) imstande ist, mit einem jeweiligen feststehenden Pol zusammenzuwirken, und
- einen Mechanismus (22), der imstande ist, die Position jedes bewegbaren Pols (16) bezüglich des feststehenden Pols zu steuern, mit welchem der bewegbare Pol (16) zusammenwirken kann.

## Claims

1. Movable pole (16) of a switchgear (10) comprising:
- a pole cage (30), the pole cage (30) comprising two side walls (44, 46) parallel to each other, at least one of the two side walls (44) delimiting at least one centring hole (58) defining a centring axis (C-C') and an interior volume (V),
- a support leg (42), the pole cage (30) being rotatably attached with respect to the support leg (42),
- two flanges (36, 38), each flange (36, 38) being configured to be connected to a respective side wall (44, 46) of the pole cage (30), each flange (36, 38) comprising attachment members (68), each attachment member (68) being intended to cooperate respectively with one of the centring holes (58), at least one of the attachment members (68) being a load take-up member **characterised in that** said at least one attachment member comprises an attachment part (72) defining an insertion axis (I-I') and a centring part (76) suitable for cooperating with the attachment part (72), the centring part (76) being configured to be inserted at least partly into the interior volume (V) of the centring hole (58) with which said at least one of the attachment members (68) is suitable for cooperating such that the insertion axis (I-I') of the centring part (76) is aligned with the centring axis (C-C') of the centring hole (58) with which said at least one of the attachment members (68) is configured to cooperate.

2. Movable pole according to claim 1, wherein at least one of the side walls (44, 46) delimits two centring holes (58, 60) each defining a centring axis (C-C') and an interior volume (V), the flange (36, 38) configured to be connected to the side wall (44, 46) concerned comprising two load take-up members (68, 70).

3. Movable pole according to claim 2, wherein the side wall (44) has an elongated shape along a first direction (X-X'), the two load take-up members (68, 70) being arranged along a line parallel to the first direction (X-X').

4. Movable pole according to claim 2 or 3, wherein the side wall (44) comprises an upper end (52), a lower end (54) and a middle part (56) connecting the two ends (52, 54), the support leg (42) being connected to the lower end (54) of the side wall (44) of the pole cage (30), the first centring hole (58) being delimited by the upper end (52) of the side wall (44), the second centring hole (60) being delimited by the middle part (56) of the side wall (44).

5. Movable pole according to any one of claims 1 to 4, wherein at least one of the side walls (44, 46) has no centring pin.

6. Movable pole according to any one of claims 1 to 5, wherein the attachment part (72) and the centring part (76) of each load take-up member (68, 70) are integrally formed.

7. Movable pole according to claim 6, wherein at least one of the load take-up members (68, 70) is a shoulder screw.

8. Movable pole according to any one of claims 1 to 5, wherein the attachment part (72) and the centring part (76) of each load take-up member (68, 70) are two different parts.

9. Movable pole according to claim 8, wherein the centring part (76) of each load take-up member (68, 70) forms part of the flange (36, 38).

10. Switchgear (10) comprising:
- at least one movable pole (16) according to any one of claims 1 to 9,
- a fixed pole for each movable pole (16), each movable pole (16) being configured to cooperate with a respective fixed pole, and
- a mechanism (22) configured to manoeuvre the position of each movable pole (16) with respect to the fixed pole with which the movable pole (16) is configured to cooperate.
